# FASCICULE DE BREVET EUROPEEN

(11) **EP 1 235 458 B1**
(45) Date de publication et mention de la délivrance du brevet: **09.04.2008**
(21) Numéro de dépôt: 02290245.6
(22) Date de dépôt: 04.02.2002
(51) Int. Cl.: H04Q 7/38, G06F 9/46

(54) **Procédé de gestion de ressources de traitement dans un système de radiocommunications mobiles**
Verfahren zur Verwaltung von Verarbeitungsbetriebsmitteln in einem Mobilfunksystem
Method for management of processing resources in a mobile radiocommunication system

(30) Priorité: 23.02.2001 FR 0102527
(43) Date de publication de la demande: 28.08.2002
(73) Titulaire: Evolium S.A.S., 75008 Paris (FR)
(72) Inventeur: Agin, Pascal, 94370 Sucy en Brie (FR)
(74) Mandataire: El Manouni, Josiane

(56) Documents cités:
- WO-A-00/33589
- WO-A-00/54536
- GB-A- 2 347 317
- EUROPEAN TELECOMMUNICATIONS STANDARDS INSTITUTE: "Technical Specification;Universal Mobile Telecommunications System (UMTS); UTRAN lub Interface NBAP Signalling (3G TS 25.433 version 3.2.0 Release 1999)" ETSI TS 125 433 V3.2.0, XX, XX, juin 2000 (2000-06), XP002166441

## Description

La présente invention concerne d'une manière générale les systèmes de radiocommunications mobiles, et plus particulièrement les systèmes utilisant la technique CDMA (pour "Code Division Multiple Access" en anglais).

La technique CDMA est notamment utilisée dans les systèmes dits de troisième génération, tels que notamment le système UMTS (pour "Universal Mobile Telecommunication System" en anglais).

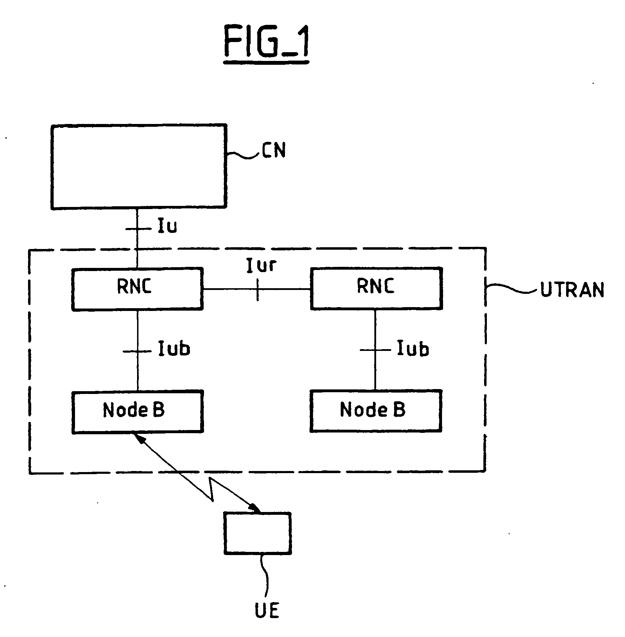

D'une manière générale, un réseau de radiocommunications mobiles comporte, comme rappelé sur la figure 1, un ensemble de stations de base et de contrôleurs de stations de base. Dans l'UMTS, ce réseau est aussi appelé UTRAN, pour "UMTS Terrestrial Radio Access Network", les stations de base sont aussi appelées Node B, et les contrôleurs de stations de base sont aussi appelés RNC (pour "Radio Network Controller" en anglais).

L'UTRAN est en relation d'une part avec des stations mobiles (appelées aussi équipements utilisateur, ou "User Equipment" ou UE), par une interface appelée interface « Uu », et d'autre part avec un coeur de réseau, ou CN (pour « Core Network » en anglais), par une interface appelée interface « lu ».

Comme rappelé sur la figure 1, les RNC sont reliés :
- aux Node B par une interface appelée interface « lub »,
- entre eux par une interface appelée interface « lur »,
- au coeur de réseau CN par une interface appelée interface « lu ».

Pour un Node B donné, le RNC qui le contrôle est aussi appelé CRNC (pour « Controlling Radio Network Controller » en anglais), et est donc relié à ce Node B via l'interface « lub ». Le CRNC a un rôle de contrôle de charge et de contrôle et d'allocation de ressources radio pour les Node B qu'il contrôle.

Pour une communication donnée relative à un équipement utilisateur UE donné, il existe un RNC, appelé SRNC (pour « Serving Radio Network Controller » en anglais) qui est connecté au coeur de réseau CN via l'interface « lu ». Le SRNC a un rôle de contrôle pour la communication considérée, incluant des fonctions d'ajout ou de retrait de liens radio (selon la technique de transmission en macro-diversité), de contrôle de paramètres susceptibles de changer en cours de communication, tels que débit, puissance, facteur d'étalement, ...etc.

Dans les systèmes CDMA les limitations de capacité sur l'interface radio sont fondamentalement différentes de ce qu'elles sont dans les systèmes utilisant d'autres techniques d'accès multiple, telles que notamment la technique TDMA (pour "Time Division Multiple Access" en anglais). La technique TDMA est notamment utilisée dans les systèmes dits de deuxième génération tels que le système GSM (pour "Global System for Mobile communications" en anglais). Dans les systèmes CDMA, tous les utilisateurs partagent la même ressource de fréquence à tout instant. La capacité de ces systèmes est donc limitée par les interférences, ces systèmes étant aussi appelés pour cette raison "soft limited systems" (en anglais).

C'est pourquoi, dans les systèmes CDMA, on prévoit des algorithmes tels que des algorithmes dits de contrôle de charge (ou "load control" en anglais), pour prévenir les surcharges, les détecter et le cas échéant les corriger, afin d'éviter une dégradation de qualité, et des algorithmes dits de contrôle d'admission d'appel (ou "call admission control" en anglais), pour décider si la capacité d'une cellule non utilisée à un instant donné est suffisante pour accepter un nouvel appel dans cette cellule (en fonction de divers paramètres tels que le service requis pour cet appel, ...etc). Dans ce qui suit ces divers algorithmes seront aussi regroupés sous le terme général de contrôle de charge.

Ces algorithmes utilisent habituellement seulement des critères radio, et sont habituellement mis en oeuvre dans le CRNC, qui ne dispose pas d'informations sur la capacité de traitement des Node B qu'il contrôle. Dans ces conditions, il peut par exemple se produire qu'un nouvel appel soit accepté par le CRNC, puis finalement rejeté par manque de ressources de traitement dans le Node B, ce qui entraîne inutilement des traitements supplémentaires dans le CRNC et des échanges de signalisation supplémentaires entre CRNC et Node B.

Bien sûr il serait possible d'éviter ces inconvénients en prévoyant dans les Node B des ressources de traitement suffisantes pour couvrir tous les cas, y compris les cas de capacité maximale (correspondant au cas de très faible niveau d'interférence). Mais ceci conduirait à avoir des stations de base coûteuses, et surdimensionnées la plupart du temps. En outre, dans le cas d'introduction progressive des services offerts par ces systèmes, la capacité de traitement des stations de base peut être limitée au début de la mise en service de ces systèmes, puis progressivement augmentée ensuite.

Il serait donc souhaitable de tenir compte de la capacité de traitement des stations de base (ou Node B) pour le contrôle de la charge dans un tel système.

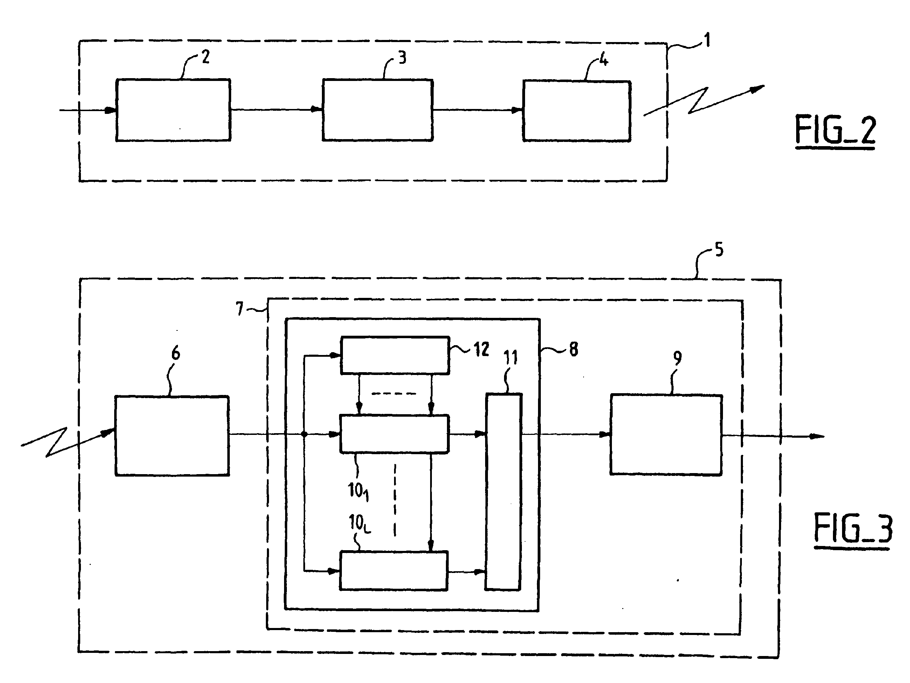

Les figures 2 et 3 rappellent les principaux traitements utilisés, respectivement en émission et en réception, dans une station de base telle que notamment un Node B pour le système UMTS.

Sur la figure 2 est illustré un émetteur 1 comportant:
- des moyens de codage-canal 2,
- des moyens d'étalement 3,
- des moyens d'émission radio-fréquence 4.

Ces différents traitements sont bien connus de l'homme du métier, et ne nécessitent pas d'être re-décrits ici de manière détaillée.

De manière connue, le codage-canal utilise des techniques telles que le codage correcteur d'erreurs et l'entrelacement, permettant d'obtenir une protection contre les erreurs de transmission.

Le codage (tel que le codage correcteur d'erreurs) est destiné à introduire une redondance dans les informations transmises. Le taux de codage est défini comme le rapport du nombre de bits d'information à transmettre sur le nombre de bits transmis ou bits codés. Différents niveaux de qualité de service peuvent être obtenus en utilisant différents types de codes correcteurs d'erreurs. Par exemple, dans l'UMTS, pour un premier type de trafic (tel que des données à haut débit) on utilise un premier type de code correcteur d'erreurs constitué par un turbo-code, et pour un deuxième type de trafic (tel que des données à plus faible débit ou de la voix) on utilise un deuxième type de code correcteur d'erreurs, constitué par un code convolutionnel.

Le codage-canal inclut aussi généralement une adaptation de débit destinée à adapter le débit à transmettre au débit offert pour sa transmission. L'adaptation de débit peut inclure des techniques telles que répétition et/ou poinçonnage, le taux d'adaptation de débit étant alors défini comme le toux de répétition et/ou de poinçonnage.

Le débit brut est défini comme le débit effectivement transmis sur l'interface radio. Le débit net est le débit obtenu après déduction, du débit brut, de tout ce qui n'est pas utile pour l'utilisateur, comme notamment la redondance introduite par le codage.

L'étalement utilise les principes connus de l'étalement de spectre. La longueur du code d'étalement utilisé est aussi appelée facteur d'étalement.

On rappelle que dans un système tel que noatmment l'UMTS le débit net (appelé aussi par la suite plus simplement « débit ») peut varier au cours d'une même communication, et que le facteur d'étalement peut en outre varier en fonction du débit à transmettre.

Sur la figure 3 est illustré un récepteur 5 comportant:
- des moyens de réception radio-fréquence 6,
- des moyens 7 d'estimation des données reçues, comportant eux-mêmes notamment des moyens de désétalement 8 et des moyens de décodage-canal 9.

Ces différents traitements sont également bien connus de l'homme du métier, et ne nécessitent donc pas non plus d'être re-décrits ici de manière détaillée.

La figure 3 illustre un exemple de traitement pouvant être mis en oeuvre dans les moyens de désétalement 8. Ce traitement correspond en l'occurrence à celui mis en oeuvre dans un récepteur de type Rake, permettant d'améliorer la qualité de l'estimation des données reçues, en exploitant les phénomènes de multi-trajets, c'est-à-dire de propagation d'un même signal source selon des trajets multiples, obtenus notamment par réflexions multiples sur des éléments de l'environnement. Dans les systèmes CDMA, contrairement notamment aux systèmes TDMA, ces trajets multiples peuvent en effet être exploités pour améliorer la qualité de l'estimation des données reçues.

Un récepteur Rake comporte un ensemble de L doigts (ou "fingers" en anglais) notés 10₁ à 10_{L}, et des moyens 11 de combinaison des signaux issus de ces différents doigts. Chaque doigt permet de désétaler le signal reçu selon l'un des différents trajets pris en compte, les différents trajets pris en compte étant déterminés par des moyens 12 pour estimer la réponse impulsionnelle du canal de transmission. Les moyens 11 permettent de combiner les signaux désétalés correspondant aux différents trajets considérés, selon un traitement destiné à optimiser la qualité de l'estimation des données reçues.

La technique de réception au moyen d'un récepteur Rake est également utilisée en liaison avec la technique de transmission en macro-diversité, selon laquelle un même signal source est transmis simultanément à une même station mobile par plusieurs stations de base. La technique de transmission en macro-diversité permet non seulement d'améliorer les performances en réception, au moyen d'un récepteur Rake, mais aussi de minimiser les risques de perte d'appel lors de transferts inter-cellulaires, ou "handovers" en anglais. Pour cette raison elle est aussi appelée "soft handover" (en anglais), par opposition à la technique de "hard handover" selon laquelle une station mobile n'est connectée à chaque instant qu'à une seule station de base.

Les moyens d'estimation des données reçues peuvent en outre utiliser diverses techniques destinées à réduire les interférences telles que par exemple la technique dite de détection multi-utilisateur (ou "multi-user detection" en anglais).

Il est aussi possible d'utiliser une pluralité d'antennes de réception. Les moyens d'estimation des données reçues comportent alors en outre des moyens de combinaison des signaux obtenus pour ces différentes antennes de réception, également de manière à optimiser la qualité de l'estimation des données reçues.

Le décodage-canal inclut des fonctions telles qu'un désentrelacement et un décodage correcteur d'erreurs. Le décodage correcteur d'erreurs est généralement nettement plus complexe que le codage correcteur d'erreurs et peut utiliser des techniques telles que par exemple le décodage par maximum de vraisemblance. Par exemple, pour les codes convolutionnels, on peut utiliser un algorithme dit de Viterbi.

Pour pouvoir traiter simultanément plusieurs utilisateurs, une station de base ou Node B comporte un ensemble d'émetteurs et de récepteurs tels que l'émetteur et le récepteur ainsi rappelés. Une grande capacité de traitement est ainsi requise dans une station de base ou Node B, notamment, en réception, pour l'estimation des données reçues.

Comme indiqué précédemment, il est donc souhaitable de tenir compte de la capacité de traitement d'une station de base, pour le contrôle de la charge dans un système tel que le système UMTS par exemple.

Ainsi, pour le système UMTS, il est spécifié dans le document 3G TS 25.433 publié par le 3GPP ("3^{rd} Generation Partnership Project") que le Node B signale au CRNC sa capacité de traitement globale (appelée "capacity credit"), et la quantité de cette capacité de traitement globale, ou coût, pour chaque valeur du facteur d'étalement (ou « spreading factor » en anglais, ou SF) possible dans ce système. L'ensemble des coûts pour les différentes valeurs possibles du facteur d'étalement est aussi appelé loi de consommation de capacité (ou « capacity consumption law» en onglais). De telles informations sont signalées par un Node B ou CRNC à chaque fois que la capacité de traitement de ce Node B est changée, en utilisant un message appelé « Resource Status Indication », ou en réponse à une requête du CRNC en utilisant un message, appelé « Audit Response ».

Le CRNC met alors à jour le crédit restant, sur la base de la loi de consommation, notamment, dans le système UMTS:
- pour les canaux dédiés, lors des procédures d'établissement, addition, effacement, ou reconfiguration, d'un lien radio (ou en anglais, « radio link set-up », « radio link addition », « radio link deletion », « radio link reconfiguration ») telles que définies dans le document 3G TS 25.433 publié par le 3GPP,
- pour les canaux communs, lors des procédures d'établissement, effacement, ou reconfiguration, d'un canal commun (ou en anglais, « common transport channel set-up », « common transport channel deletion », « common transport channel reconfiguration ») telles que définies dans le document 3G TS 25.433 publié par le 3GPP.

De telles procédures sont aussi appelées procédures NBAP (pour « Node B Application Part » en anglais), et les messages de signalisation correspondants sont aussi appelés messages NBAP.

Dans la norme 3G TS 25.433, deux lois de consommation distinctes ont été définies, une pour tes canaux dédiés, et une pour les canaux communs. On rappelle qu'un canal dédié est un canal alloué à un utilisateur donné, alors qu'un canal commun est un canal partagé entre plusieurs utilisateurs. Par exemple, dans le système UMTS, le canal DCH (pour « Dedicated CHannel » en anglais) est un canal dédié; et les canaux tels que notamment RACH (pour « Random Access CHannel » en anglais), FACH (pour « Forward Access CHannel » en anglais), CPCH (pour « Common Packet CHannel » en anglais), DSCH (pour « Downlink Shared. CHannel » en anglais), ...etc, sont des canaux communs.

Ainsi que l'a observé le demandeur, le mécanisme de crédit tel que décrit dans la norme 3G TS 25.433 dans son état actuel pose encore certains problèmes.

Un problème est que la norme actuelle n'indique pas comment le cas de facteur d'étalement variable et/ou de nombre variable de codes d'étalement (dans le cas de transmission multicode) doit être pris en compte dans ce mécanisme de crédit.

Or, dans le système UMTS, le facteur d'étalement et/ou le nombre de codes d'étalement utilisés (dans le cas de transmission multicode) peuvent varier au cours d'une même communication, dans le sens montant. La quantité de ressources de traitement nécessaire n'est pas la même suivant le facteur d'étalement utilisé et/ou suivant le nombre de codes d'étalement utilisés. Il serait donc souhaitable d'en tenir compte dans le mécanisme de crédit considéré.

Le but de la présente invention est d'apporter une solution à ce problème.

Un objet de la présente invention est ainsi un procédé de gestion de ressources de traitement dans un système de radiocommunications mobiles, dans lequel un contrôleur de stations de base gère des ressources radio et des ressources de traitement correspondantes, ces dernières étant prévues dans une station de base, procédé dans lequel:
- la station de base signale au contrôleur de stations de base sa capacité de traitement globale, ou crédit de capacité, et la loi de consommation, ou quantité de cette capacité de traitement globale, ou coût, pour différentes valeurs de facteur d'étalement,
- le contrôleur de stations de base met à jour le crédit de capacité sur la base de la loi de consommation,
procédé caractérisé en ce que :
- dans le cas de facteur d'étalement variable, et/ou de nombre de codes d'étalement variable, ladite mise à jour est effectuée sur la base d'un facteur d'étalement de référence et/ou d'un nombre de référence de codes d'étalement.

Suivant une outre caractéristique, ledit facteur d'étalement de référence est un facteur d'étalement minimum.

Suivant une autre caractéristique, ledit nombre de référence de codes d'étalement est un nombre maximum de codes d'étalement.

Suivant une autre caractéristique, le facteur d'étalement minimum a une valeur prédéterminée.

Suivant une autre caractéristique, ladite voleur prédéterminée est fonction notamment du type de service.

Suivant une outre caractéristique, ladite valeur prédéterminée est ajustable par des moyens d'opération et de maintenance.

Suivant une autre caractéristique, ledit contrôleur de stations de base étant constitué par un CRNC (« Controlling Radio Network Controller ») et ladite valeur prédéterminée de facteur d'étalement minimum étant déterminée dans une entité distincte constituée par un SRNC (« Serving Radio Network controller »), ladite valeur prédéterminée de facteur d'étalement minimum est signalée par le SRNC au CRNC.

Suivant une autre caractéristique, ledit facteur d'étalement minimum a une valeur calculée.

Suivant une autre caractéristique, ladite valeur calculée est obtenu à partir d'un paramètre correspondant à un ensemble de combinaisons de formats de transport (ou TFCS, pour « Transport Format Combination Set »).

Suivant une autre caractéristique, ledit contrôleur de stations de base étant constitué par un CRNC (« Controlling Radio Network Controller »), ladite voleur calculée est calcule dans le CRNC à partir dudit paramètre signalé au CRNC par une entité distincte constituée par un SRNC (« Serving Radio Network controller »).

Suivant une autre caractéristique, ledit contrôleur de stations de base étant constitué par un CRNC (« Controlling Radio Network Controller », ladite valeur calculée est signalée au CRNC par un SRNC (« Serving Radio Network Controller ») qui la calcule lui-même à partir dudit paramètre.

Un autre objet de la présente invention est un système de radiocommunications mobiles, systèmes dans lequel:
- une station de base comporte des moyens pour signaler à un contrôleur de stations base sa capacité de traitement globale, ou crédit de capacité, et la loi de consommation, ou quantité de cette capacité de traitement globale, ou coût, pour différentes valeurs de facteur d'étalement,
- le contrôleur de stations de base comporte des moyens pour mettre à jour le crédit de capacité sur la base de la loi de consommation,
système caractérisé en ce que :
- le contrôleur de stations de base comporte des moyens pour, dans le cas de facteur d'étalement variable, et/ou de nombre de codes d'étalement variable, effectuer ladite mise à jour sur la base d'un facteur d'étalement de référence et/ou d'un nombre de référence de codes d'étalement.

Un autre objet de la présente invention est un contrôleur de stations de base comportant des moyens pour recevoir d'une station de base sa capacité de traitement globale, ou crédit de capacité, et la loi de consommation, ou quantité de cette capacité de traitement globale, ou coût, pour différentes valeurs de facteur d'étalement, et des moyens pour mettre à jour le crédit de capacité sur la base de la loi de consommation, caractérisé en ce qu'il comporte:
- des moyens pour, dans le cas de facteur d'étalement variable, et/ou de nombre de codes d'étalement variable, effectuer ladite mise à jour sur la base d'un facteur d'étalement de référence et/ou d'un nombre de référence de codes d'étalement.

Suivant une autre caractéristique, lesdits moyens pour effectuer ladite mise à jour comportent des moyens pour recevoir une valeur prédéterminée de facteur d'étalement de référence et/ou de nombre de référence de codes d'étalement, signalée à ce contrôleur de stations de base (CRNC) par un contrôleur de stations de base distinct (SRNC).

Suivant une autre caractéristique, lesdits moyens pour effectuer ladite mise à jour comportent des moyens pour calculer une valeur de facteur d'étalement de référence, à partir d'un paramètre signalé à ce contrôleur de stations de base (CRNC) par un contrôleur de stations de base distinct (SRNC).

Suivant une autre caractéristique, lesdits moyens pour effectuer ladite mise à jour comportent des moyens pour recevoir une valeur de facteur d'étalement de référence, signalée à ce contrôleur de stations de base (CRNC) par un contrôleur de stations de base distinct (SRNC) qui la calcule lui-même.

Suivant une autre caractéristique, dans le sens montant, le facteur d'étalement de référence est le facteur d'étalement minimum signalé dans le message « Radio Link Setup Request », « Minimum UL Channelisation Code length » IE.

Suivant une autre caractéristique, le facteur d'étalement de référence est le facteur d'étalement minimum calculé à partir du paramètre TFCS Transport Format Combination Set.

D'autres objets et caractéristiques de la présente invention apparaîtront à la lecture de la description suivante d'exemples de réalisation, faite en relation avec les dessins ci-annexés dans lesquels:
- la figure 1, décrite précéclemment, rappelle l'architecture générale d'un système de radiocommunications mobiles, tel que notamment le système UMTS,
- les figures 2 et 3, décrites précédemment, rappellent les principaux traitements utilisés, respectivement en émission et en réception, dans une station de base, telle qu'un Node B pour le système UMTS,
- la figure 4 est un schéma destiné à illustrer un exemple de mise eh oeuvre d'un procédé suivant l'invention.

La présente invention a donc notamment pour but de résoudre différentes problème posés par le mécanisme de crédit tel que décrit dans la norme 3G TS 25.433 dans son état actuel.

Un problème est que le cas de facteur d'étalement variable et/ou de nombre variable de facteurs d'étalement n'est actuellement pas traité dans la norme.

Lo solution suivant l'invention, pour résoudre ce problème, peut aussi être expliquée de la façon suivante.

Dans le sens montant, le facteur d'étalement peut varier en fonction dé la quantité de données que l'UE a à transmettre (la façon de choisir le facteur d'étalement ainsi que le nombre de codes d'étalement est normalisée). Le CRNC n'a pas a priori connaissance de ce facteur d'étalement et ne peut pas prendre en compte ce facteur d'étalement pour mettre à jour le crédit de capacité.

La solution proposée est de mettre à jour le crédit de capacité sur la base d'un facteur d'étalement de référence. Avantageusement ledit facteur d'étalement de référence est le facteur d'étalement minimum. En effet ce dernier peut être déterminé relativement facilement puisqu'il est principalement dépendant du débit maximum qui fait partie de la définition du service (on notera que le choix du facteur d'étalement minimum n'est pas normalisé et dépend donc des constructeurs).

Suivant un premier mode de réalisation, le facteur d'étalement minimum a une valeur prédéterminée, fonction notamment du type de service. Pour plus de flexibilité, cette valeur prédéterminée peut être ajustable, par des moyens tels que notamment des moyens « O&M », ou « Operation & Maintenance » en anglais.

Suivant ce premier mode de réalisation, le facteur d'étalement minimum peut être fixé par le SRNC, et signalé au CRNC sur l'interface « lur » (si le SRNC est différent du CRNC) via les messages « Radio Link Addition Request » et « Radio Link Set-up Request », l'élément d'information correspondant, ou IE (pour « Information Element » en anglais) étant noté « Minimum UL Channelization Code Length ». Ce facteur d'étalement minimum est ensuite signalé aussi par le CRNC au Node B avec des messages du même type sur l'interface « lub ».

Suivant un deuxième mode de réalisation, le facteur d'étalement minimum peut être calculé, notamment à partir d'un paramètre appelé TFCS (pour « Transport Format Combination Set » en anglais) habituellement signalé, selon les procédures prévues par les normes correspondantes, pour les canaux dédiés (ou procédures de liens radio), ou pour les canaux de transport communs.

On rappelle qu'une caractéristique d'un système tel que l'UMTS est la possibilité de transporter plusieurs services sur une même connexion, c'est-à-dire plusieurs canaux de transport sur un même canal physique. De tels canaux de transport (ou TrCH, pour "Transport Channels" en anglais) sont traités séparément selon un schéma de codage-canal (incluant un codage détecteur d'erreurs, un codage correcteur d'erreurs, une adaptation de débit, et un entrelacement, comme rappelé en relation avec la figure 2) avant d'être multiplexés temporellement pour former un canal de transport composite codé (ou CCTrCH, pour "Coded Composite Transport Channel" en anglais) à transmettre sur un ou plusieurs canaux physiques. Plus d'informations sur ces aspects de l'UMTS peuvent être trouvés dans le document 3G TS25 212 V3.5.0 publié par le 3GPP.

On rappelle également qu'une autre caractéristique d'un système tel que l'UMTS est d'autoriser des débits variables pour les utilisateurs, en cours de communication. Les données transportées par les canaux de transport sont organisées en unités de données appelées blocs de transport (ou « Transport Blocks » en anglais) reçus avec une périodicité appelée intervalle de temps de transmission (ou TTI, pour « Transmission Time Interval » en anglais). Le nombre et la taille des blocs de transport reçus pour un canal de transport donné sont variables en fonction du débit, et on définit la notion de format de transport comme la connaissance du nombre et de la taille de ces blocs de transport (et donc du débit instantané), pour un canal de transport donné. On définit aussi la notion de combinaison de format de transport (ou TFC, pour « Transport Format Combination » en anglais) comme une combinaison de formats de transport autorisée pour différents canaux de transport destinés à être multiplexés selon un même canal de transport composite codé (CCTrCH). On définit enfin la notion d'ensemble de combinaisons de format de transport (ou TFCS, pour « Transport Format Combination Set » en anglais) comme l'ensemble de telles combinaisons possibles de formats de transport. Plus d'informations sur ces aspects de l'UMTS peuvent être trouvés dans le document TS 25.302 V.3.7.0 publié par le 3GPP.

Dans la norme 3G TS 25.212, il est spécifié comment choisir le facteur d'étalement dans le sens montant en fonction du TFC. Ainsi, à partir du TFCS, le CRNC peut aussi calculer le facteur d'étalement minimum pour tous les TFC dans le TFCS, ou plus généralement le CRNC peut calculer un facteur d'étalement de référence sur la base du TFCS, quelle que soit la méthode de calcul utilisée.

Ce deuxième mode de réalisation est un peu plus complexe, mais ce peut être la seule solution quand le facteur d'étalement minimum n'est pas fixé, comme cela est le cas par exemple pour le canal PCPCH (« Physical Common Packet Channel » en anglais).

De la même façon, le crédit de capacité peut être mis à jour sur la base d'un nombre de référence de codes d'étalement (ou ici nombre de canaux DPDCHs, pour « Dedicated Physical Data Channel », pour le sens montant), ce nombre de référence étant avantageusement un nombre maximum, signalé par le SRNC au CRNC au moyen de l'élément d'information IE « Maximum Number of UL DPDCHs ». En effet, le nombre de canaux DPDCHs dans le sens montant peut aussi varier et n'est donc pas connu non plus, a priori, du CRNC.

De manière générale, pour résoudre ce deuxième problème l'invention prévoit donc essentiellement que, dans le cas de facteur d'étalement variable, et/ou de nombre de codes d'étalement variable, ladite mise à jour est effectuée sur la base d'un facteur d'étalement de référence et/ou d'un nombre de référence de codes d'étalement.

Suivant un mode de réalisation avantageux, dans le sens montant, le facteur d'étalement de référence est le facteur d'étalement minimum signalé dans le message « Radio Link Setup Request » (« Minimum UL Channelisation Code length » IE).

De même, dans le sens montant, le nombre de référence de codes d'étalement est le nombre maximum signalé dans le message « Radio Link Setup Request » (« Maximum number of UL DPDCHs » IE).

On notera aussi que ce qui a été dit précédemment pour le sens montant peut aussi s'appliquer au sens descendant ou simultanément au sens montant et descendant.

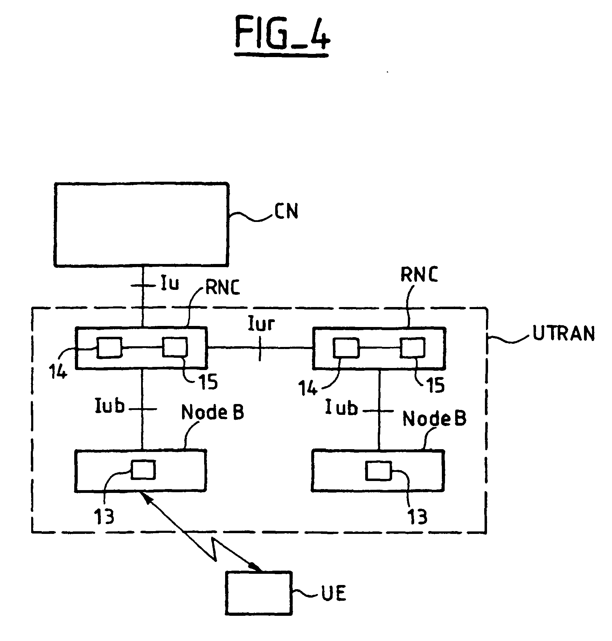

La figure 4 peut également être utilisée pour illustrer un exemple de moyens à prévoir dans une station de base (ou Node B dans un système tel que le système UMTS), et dans un contrôleur de stations de base (ou RNC pour un système tel que le système UMTS), pour mettre en oeuvre un tel procédé suivant l'invention.

Une station de base notée Node B comporte ainsi (en plus d'autres moyens qui peuvent être des moyens classiques):
- des moyens notés 13 pour signaler à un contrôleur de stations de base sa capacité de traitement globale, ou crédit de capacité, et la quantité de cette capacité de traitement globale, ou coût, pour différentes valeurs de facteur d'étalement.

Un contrôleur de stations de base noté CRNC (pour « Controlling Radio Network Controller ») comporte ainsi (en plus d'autres moyens qui peuvent être des moyens classiques):
- des moyens notés 14 pour recevoir d'une station de base sa capacité de traitement globale, ou crédit de capacité, et la quantité de cette capacité de traitement globale, ou coût, pour différentes valeurs de facteur d'étalement,
- des moyens également notés 15 pour mettre à jour le crédit de capacité sur la base de la loi de consommation, ladite mise à jour étant effectuée, dans le cas de facteur d'étalement variable et/ou de nombre de codes d'étalement variable, sur la base d'un facteur d'étalement de référence et/ou d'un nombre de référence de codes d'étalement.

Suivant un premier mode de réalisation, les moyens 15 peuvent comporter :
- des moyens pour recevoir une valeur prédéterminée de facteur d'étalement de référence et/ou de nombre de référence de codes d'étalement, signalée à ce contrôleur de stations de base (CRNC) par un contrôleur de stations de base distinct (SRNC).

Suivant un deuxième mode de réalisation, les moyens 15 peuvent comporter :
- des moyens pour calculer une valeur de facteur d'étalement de référence à partir d'un paramètre signalé à ce contrôleur de stations de base (CRNC) par un contrôleur de stations de base distinct (SRNC).

Suivant une autre possibilité, les moyens 15 peuvent comporter :
- des moyens pour recevoir une valeur de facteur d'étalement de référence, signalée par un contrôleur de stations de base distinct (SRNC) qui la calcule lui-même.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

On notera que le terme de « mise à jour » du crédit de capacité utilisé dans tout ce qui précède est destiné à recouvrir aussi bien des opérations par lesquelles ce crédit de capacité est débité, dans le cas où de nouvelles ressources radio sont requises, que des opérations par lesquelles ce crédit de capacité est crédité, dans le cas où de nouvelles ressources radio ne sont plus nécessaires et sont donc restituées.

Notamment :
- pour les procédures de « radio link set-up », « radio link addition », et « common transport channel set-up », le crédit de capacité est débité, pour les procédures de «radio link deletion », et de « common transport channel deletion », le crédit de capacité est crédité,
- pour le cas de « radio link reconfiguration » et de « common transport channel reconfiguration » le crédit de capacité est débité ou crédité selon que la différence entre le coût d'allocation pour le nouveau débit et pour l'ancien débit est négative ou positive.

Dans la description ci-dessus, le coût peut être fonction du facteur d'étalement, comme spécifié dans la norme rappelée précédemment (dans son état actuel). Cependant le principe ainsi décrit n'est pas limité à ce cas, et s'applique également au cas où le coût serait fonction d'un ou plusieurs autres paramètres, tels que notamment le débit.

## Revendications

1. Procédé de gestion de ressources de traitement dans un système de radiocommunications mobiles, dans lequel un contrôleur de stations de base gère des ressources radio et des ressources de traitement correspondantes, ces dernière étant prévues dans une station de base, procédé dans lequel.
- la station de base signale au contrôleur dé stations de base sa capacité de traitement globale, ou crédit de capacité, et la loi de consommation, ou quantité de cette capacité de traitement globale, ou coût, pour différentes valeurs de facteur d'étalement,
- le contrôleur de stations de base met à jour le crédit de capacité sur la base de la loi de consommation,
procédé **caractérisé en ce que** :
- dans le cas de facteur d'étalement variable, et/ou de nombre de codes d'étalement variable, au cours d'une même communication, ladite mise à jour est effectuée sur la base d'un facteur d'étalement de référence et/ou d'un nombre de référence de codes d'étalement.

2. Procédé selon la revendication 1, dans lequel ledit facteur d'étalement de référence est un facteur d'étalement minimum.

3. Procédé selon la revendication 1, dans lequel ledit nombre de référence de codes d'étalement est un nombre maximum de codes d'étalement.

4. Procédé selon la revendication 2, dans lequel ledit facteur d'étalement minimum a une valeur prédéterminée.

5. Procédé selon la revendication 4, dans lequel ladite valeur prédéterminée est fonction notamment du type de service.

6. Procédé selon l'une des revendications 4 ou 5, dans lequel ladite valeur prédéterminée est ajustable par des moyens d'opération et de maintenance.

7. Procédé selon l'une des revendications 4 à 6, dans lequel, ledit contrôleur de stations de base étant constitué par un CRNC « Controlling Radio Network Controller » et ladite valeur prédéterminée de facteur d'étalement minimum étant déterminée dans une entité distincte constituée par un SRNC « Serving Radio Network controller », ladite valeur prédéterminée de facteur d'étalement minimum est signalée par le SRNC du CRNC.

8. Procédé selon la revendication 2, dans lequel ledit facteur d'étalement minimum d'une valeur calculée.

9. Procédé selon la revendication 8, dans lequel ladite valeur calculée est obtenue à partir d'un paramètre correspondant à un ensemble de combinaisons de formats de transport ou TFCS, pour « Transport Format Combination Set ».

10. Procédé selon la revendication 9, dans lequel, ledit contrôleur de stations de base étant constitué par un CRNC « Controlling Radio Network Controller », ladite valeur calculée est calculée dans le CRNC à partir dudit paramètre, signalé au CRNC par une entité distincte constituée par un SRNC « Serving Radio Network controller ».

11. Procédé selon la revendication 9, dans lequel, ledit contrôleur de stations de base étant constitué par un CRNC « Controlling Radio Network Controller », ladite valeur calculée est signalée au CRNC par un entité distincte constituée par un SRNC « Serving Radio Network Controller » qui la calcule lui-même à partir duit paramètre.

12. Procédé selon la revendication 1, dans lequel, dans le sens montant, le facteur d'étalement de référence est le facteur d'étalement minimum signalé dans le message « Radio Link Setup Request », « Minimum UL Channelisation Code length » IE.

13. Procédé selon la revendication 1, dans lequel le facteur d'étalement de référence est le facteur d'étalement minimum calculé à partir du paramètre TFCS Transport Format Combination Set.

14. Système de radiocommunications mobiles, système dans lequel:
une station de base comporte des moyens (13) pour signaler à un contrôleur de stations de base sa capacité de traitement globale, ou crédit de capacité, et la loi de consommation, ou quantité de cette capacité de traitement globale, ou coût pour différentes valeurs de facteur d'étalement,
- le contrôleur de stations de base comporte des moyens (15) pour mettre à jour le crédit de capacité sur la base de la loi de consommation,
système **caractérisé en ce que** le contrôleur de stations de base comporte des moyens (15) pour, dans le cas de facteur d'étalement variable, et/ou de nombre de codes d'étalement variable, au cours d'une même communication, effectuer ladite mise à jour sur la base d'un facteur d'étalement de référence et/ou d'un nombre de référence de codes d'étalement.

15. Système selon la revendication 14, dans lequel, dans le sens montant, le facteur d'étalement de référence est le facteur d'étalement minimum signalé dans le message « Radio Link Setup Request », « Minimum UL Channelisation Code length » IE.

16. Système selon la revendication 14, dans lequel le facteur d'étalement de référence est le facteur d'étalement minimum calculé à partir du paramètre TFCS Transport Format Combination Set.

17. Contrôleur de stations de base pour système de radiocommunications mobiles, comportant des moyens (14) pour recevoir d'une station de base sa capacité de traitement globale, ou crédit de capacité, et la loi de consommation, ou quantité de cette capacité de traitement globale, ou coût, pour différentes voleurs de facteur d'étalement, et des moyens (15) pour mettre à jour le crédit de capacité sur la base de la loi de consommation, **caractérisé en ce qu'**il comporte:
- des moyens (15) pour, dans le cas de facteur d'étalement variable, et/ou de nombre de codes d'étalement variable, au cours d'une même communication, effectuer ladite mise à jour sur la base d'un facteur d'étalement de référence et/ou d'un nombre de référence de codes d'étalement.

18. Contrôleur de stations de base selon la revendication 17, dans lequel lesdits moyens pour effectuer ladite mise à jour comportent des moyens pour recevoir une valeur prédéterminée de facteur d'étalement de référence et/ou de nombre de référence de codes d'étalement, signalée à ce contrôleur de stations de base par un contrôleur de stations de base distinct.

19. Contrôleur de stations de base selon la revendication 17, dans lequel lesdits moyens pour effectuer ladite mise à jour comportent des moyens pour calculer une valeur de facteur d'étalement de référence à partir d'un paramètre signalé à ce contrôleur de stations de base par un contrôleur de stations de base distinct.

20. Contrôleur de stations de base selon la revendication 17, dans lequel lesdits moyens pour effectuer ladite mise à jour comportent des moyens pour recevoir une valeur de facteur d'étalement de référence, signalée par un contrôleur de stations de base distinct qui la calcule lui-même.

21. Contrôleur de stations de base selon la revendication 17, dans lequel, dans le sens montant, le facteur d'étalement de référence est le facteur d'étalement minimum signalé dans le message «Radio Link Setup Request», «Minimum UL Channelisation Code length » IE.

22. Contrôleur de stations de base selon la revendication 17, dans lequel le facteur d'étalement de référence est le facteur d'étalement minimum calculé à partir du paramètre TFCS Transport Format Combination Set.

## Claims

1. A method of managing processing resources in a mobile radio system, in which a base station controller manages radio resources and corresponding processing resources, the latter being provided in a base station, in which method:
- the base station signals to the base station controller its global processing capacity, or capacity credit, and the consumption law, or amount of said global processing capacity, or cost, for different spreading factor values; and
- the base station controller updates the capacity credit on the basis of the consumption law,
the method being **characterized in that**:
- in the case of variable spreading factor and/or variable number of spreading codes within a communication, said updating is effected on the basis of a reference spreading factor and/or a reference number of spreading codes.

2. A method according to claim 1, wherein said reference spreading factor is a minimum spreading factor.

3. A method according to claim 1, wherein said reference number of spreading codes is a maximum number of spreading codes.

4. A method according to claim 2, wherein said minimum spreading factor has a predetermined value.

5. A method according to claim 4, wherein said predetermined value is a function of the type of service in particular.

6. A method according to either claim 4 or claim 5, wherein said predetermined value is adjustable by operation and maintenance means.

7. A method according to any one of claims 4 to 6, wherein, said base station controller consisting of a controlling radio network controller (CRNC) and said predetermined minimum spreading factor value being determined in a separate entity consisting of a serving radio network controller (SRNC),said predetermined minimum spreading factor value is signaled by the SRNC to the CRNC.

8. A method according to claim 2, wherein said spreading factor has a calculated value.

9. A method according to claim 8, wherein said calculated value is obtained from a parameter corresponding to a transport format combination set (TFCS).

10. A method according to claim 9, wherein, said base station controller consisting of a controlling radio network controller (CRNC), said calculated value is calculated in the CRNC from said parameter signaled to the CRNC by a separate entity consisting of a serving radio network controller (SRNC).

11. A method according to claim 9, wherein, said base station controller consisting of a controlling radio network controller (CRNC), said calculated value is signaled to the CRNC by a separate entity consisting of a serving radio network controller (SRNC) which calculates it for itself from said parameter.

12. A method according to claim 1, in which, in the uplink direction, the reference spreading factor is the minimum spreading factor signaled in the "Radio Link Set-up Request" message, "Minimum UL Channelization Code Length" IE.

13. A method according to claim 1, in which the reference spreading factor is the minimum spreading factor calculated from the transport format combination set (TFCS) parameter.

14. A mobile radio system, in which system:
- a base station includes means (13) for signaling to a base station controller its global processing capacity, or capacity credit, and the consumption law, or amount of said global processing capacity, or cost, for different spreading factor values,
- the base station controller includes means (15) for updating the capacity credit on the basis of the consumption law,
the system being **characterized in that** the base station controller includes means (15) for acting, in the case of variable spreading factor and/or variable number of spreading codes within a communication, to effect said updating on the basis of a reference spreading factor and/or a reference number of spreading codes.

15. A system according to claim 14, in which, in the uplink direction, the reference spreading factor is the minimum spreading factor signaled in the "Radio Link Set-up Request" message, "Minimum UL Channelization Code Length" IE.

16. A system according to claim 14, in which the reference spreading factor is the minimum spreading factor calculated from the transport format combination set (TFCS) parameter.

17. A base station controller for a mobile radio system including means (14) for receiving from a base station its global processing capacity, or capacity credit, and the consumption law, or amount of said global processing capacity, or cost, for different spreading factor values, and means (15) for updating the capacity credit on the basis of the consumption law, **characterized in that** it includes:
- means (15) for acting, in the case of variable spreading factor and/or variable number of spreading codes within a communication, to effect said updating on the basis of a reference spreading factor and/or a reference number of spreading codes.

18. A base station controller according to claim 17, wherein said means for effecting said updating include means for receiving a predetermined value for a reference spreading factor and/or for a reference number of spreading codes signaled to said base station controller by a separate base station controller.

19. A base station controller according to claim 17, wherein said means for effecting said updating include means for calculating a reference spreading factor value from a parameter signaled to said base station controller by a separate base station controller.

20. A base station controller according to claim 17, wherein said means for effecting said updating include means for receiving a reference spreading factor value signaled by a separate base station controller which calculates it for itself.

21. A base station controller according to claim 17, in which, in the uplink direction, the reference spreading factor is the minimum spreading factor signaled in the "Radio Link Set-up Request" message, "Minimum UL Channelization Code Length" IE.

22. A base station controller according to claim 17, in which the reference spreading factor is the minimum spreading factor calculated from the transport format combination set (TFCS) parameter.

## Patentansprüche

1. Verfahren zur Verwaltung von Verarbeitungsressourcen in einem mobilen Funkkommunikationssystem, bei dem ein Basisstation-Controller die Funkressourcen und die entsprechenden Verarbeitungsressourcen verwaltet, wobei Letztere in einer Basisstation vorgesehen sind, wobei das Verfahren Folgendes umfasst:
die Basisstation meldet dem Basisstations-Controller ihre Gesamt-Verarbeitungskapazität, oder Capacity Credit, und das Verbrauchsgesetz oder den Umfang dieser Gesamt-Verarbeitungskapazität, oder die Kosten, für verschiedene Werte des Spreizungsfaktors,
der Basisstations-Controller aktualisiert die Verarbeitungskapazität auf der Basis des Verbrauchsgesetzes,
wobei das Verfahren **dadurch gekennzeichnet ist, dass**
- die genannte Aktualisierung im Fall eines variablen Spreizungsfaktors und/oder einer variablen Anzahl an Spreizu-ngscode während einer Verbindung auf der Basis eines Referenz-Spreizungsfaktors und/oder einer Referenzanzahl an Spreizungscodes durchgerührt wird.

2. Verfahren gemäß Anspruch 1, bei dem es sich bei dem genannten Referenz-Spreizungsfaktor um einen Mindest-Spreizungsfaktor handelt.

3. Verfahren gemäß Anspruch 1, bei dem es sich bei der genannten Referenzanzahl an Spreizungscodes um die maximale Anzahl an Spreizungscodes handelt.

4. Verfahren gemäß Anspruch 2, bei dem es sich bei dem genannten Mindest-Spreizungsfaktor um einen vordefinierten Wert handelt.

5. Verfahren gemäß Anspruch 4, bei dem der genannte vordefinierte Wert insbesondere vom Diensttyp abhängig ist.

6. Verfahren gemäß einem der Ansprüche 4 oder 5, bei dem der genannte vordefinierte Wert mit Hilfe der Betriebs- und Wartungsmittel einstellbar ist.

7. Verfahren gemäß einem: der Ansprüche 4 bis 6, bei dem der genannte Basisstations-Controller aus einem CRNC "Controlling Radio Network Controller" besteht und der genannte vordefinierte Wert für den Mindest-Spreizungsfaktor in einer anderen Einheit festgelegt wird, die aus einem SRNC "Serving Radio Network Controller" besteht, wobei der genannte vordefinierte Wert für den Mindest-Spreizungsfaktor dem CRNC vom SRNC gemeldet wird.

8. Verfahren gemäß Anspruch 2, bei dem der genannte Mindert-Spreizungsfaktor einen berechneten Wert aufweist.

9. Verfahren gemäß Anspruch 8, bei dem der genannte berechnete Wert auf der Grundlage eines Parameters ermittelt wird, der einem Satz aus Übertragungsformatkombinationen oder TFCS für "Transport Format Combination Set" entspricht.

10. Verfahren gemäß Anspruch 9, bei dem der genannte Basisstations-Controller aus einem CRNC "Controlling Radio Network Controller" besteht, wobei der genannte berechnete Wert im CRNC auf der Grundlage des genannten Parameters berechnet wird, der dem CRNC von einer anderen Einheit gemeldet wird, bei der es sich um einen SRNC "Serving Radio Network Controller" handelt.

11. Verfahren gemäß Anspruch 9, bei dem der genannte Basisstations-Controller aus einem CRNC "Controlling Radio Network Controller" besteht, wobei der genannte berechnete Wert dem CRNC von einer anderen Einheit gemeldet wird, bei der es sich um einen SRNC "Serving Radio Network Controller" handelt, der diesen auf der Grundlage des genannten Parameters selbst berechnet.

12. Verfahren gemäß Anspruch 1, bei dem es sich bei dem Referenz-Spreizungsfaktor in aufsteigender Richtung um den Mindest-Spreizungsfaktor handelt, der in der Meldung "Radio Link Setup Request" mit der IE "Minimum UL Channelisation Code Length" gemeldet wird.

13. Verfahren gemäß Anspruch 1, bei dem es sich bei dem Referenz-Spreizungsfaktor um den Mindest-Spreizungsfaktor handelt, der auf der Grundlage des Parameters TFCS Transport Format Combination Set berechnet wird.

14. Mobiles Funkkommunikationssystem, in dem:
- eine Basisstation Mittel (13) umfasst, um einem Basisstations-Controller ihre Gesamt-Verarbeitungskapazität, oder Capacity Credit, und das Verbrauchsgesetz oder den Umfang dieser Gesamt-Verarbeitungskapazität, oder die Kosten, für verschiedene Werte des Spreizungsfaktors zu melden;
- der Basisstations-Controller Mittel (15) umfasst, um die Verarbeitungskapazität auf der Basis des Verbrauchsgesetzes zu aktualisieren;
wobei das System **dadurch gekennzeichnet ist, dass**
- der Basisstations-Controller Mittel umfasst, um die genannte Aktualisierung im Fall eines variablen Spreizungsfaktors und/oder einer variablen Anzahl an Spreizungscodes während einer Verbindung auf der Basis eines Referenz-Spreizungsfaktors und/oder einer Referenzanzahl an Spreizungscodes durchzuführen.

15. System gemäß Anspruch 14, in dem es sich bei dem Referenz-Spreizungsfaktor in aufsteigender Richtung um den Mindest-Spreizungsfaktor handelt, der in der Meldung "Radio Link Setup Request" im IE "Minimum UL Channelisation Code Length" gemeldet wird.

16. System gemäß Anspruch 14, in dem es sich bei dem Referenz-Spreizungsfaktor um den Mindest-Spreizungsfaktor handelt, der auf der Grundlage des Parameters TFCS Transport Format Combination Set berechnet wird.

17. Basisstations-Controller für ein mobiles Funkkommunikationssystem, der Mittel (14) umfasst, um von einer Basisstation ihre Gesamt-Verarbeitungskapazität, oder Capacity Credit, und das Verbrauchsgesetz oder den Umfang dieser Gesamt-Verarbeitungskapazität, oder die Kosten, für verschiedene Werte des Spreizungsfaktors zu empfangen, sowie Mittel (15), um die Verarbeitungskapazität auf der Basis des Verbrauchsgesetzes zu aktualisieren, **dadurch gekennzeichnet, dass** er Folgendes umfasst:
- Mittel (15), um die genannte Aktualisierung im Fall eines variablen Spreizungsfaktors und/oder einer variablen Anzahl an Spreizungscodes während einer Verbindung auf der Basis eines Referenz-Spreizungsfaktors und/oder einer Referenzanzahl an Spreizungscodes durchzühren.

18. Basisstations-Controller gemäß Anspruch 17, bei dem die genannten Mittel zur Durchführung der genannten Aktualisierung Mittel umfassen, um einen vordefinierten. Wert für den Referenz-Spreizungsfaktor und/oder für die Referenzanzahl an Spreizungscodes zu empfangen, der diesem Basisstations-Controller von einem anderen Basisstations-Controller gemeldet wird.

19. Basisstations-Controller gemäß Anspruch 17, bei dem die genannten Mittel zur Durchführung der genannten Aktualisierung Mittel umfassen, um den Wert für den Referenz-Spreizungsfaktor auf der Grundlage eines Parameters zu berechnen, der diesem Basisstations-Controller von einem anderen Basisatations-Controller gemeldet wird.

20. Basisstations-Controller gemäß Anspruch 17, bei dem die genannten Mittel zur Durchführung der genannten Aktualisierung Mittel umfassen, um den Wert für den Referenz-Spreizungsfaktor zu empfangen, der von einem anderen Basisstations-Controller gemeldet wird, der diesen selbst berechnet.

21. Basiastations-Oontroller gemäß Anspruch 17, bei dem es sich bei dem Referenz-Spreizungsfaktor in aufsteigender Richtung um den Mindest-Spreizungsfaktor handelt, der in der Meldung "Radio Link Setup Request" im 18 "Minimum UL Channelisation Code Length" gemeldet wurde.

22. Basisstations-Controller gemäß Anspruch 17, bei dem es sich bei dem Referenz-Spreizungsfaktor um den Mindest-Spreizungsfaktor handelt, der auf der Grundlage des Parameters TFCS Transport Format Combination Set berechnet wird.
